# EUROPÄISCHE PATENTANMELDUNG

(11) **EP 2 177 854 A1**
(43) Veröffentlichungstag der Anmeldung: **21.04.2010**
(21) Anmeldenummer: 08166839.4
(22) Anmeldetag: 16.10.2008
(51) Int. Cl.: F28B 1/06, F28D 5/00, F25B 39/04

(54) **Kühlvorrichtung**

(71) Anmelder: Michelbach, Ludwig, 90513 Zirndorf (DE)
(72) Erfinder: Michelbach, Ludwig, 90513 Zirndorf (DE)
(74) Vertreter: Zech, Stefan Markus

(57) **Zusammenfassung**

Eine Kühlvorrichtung 1 zum Kühlen und/oder Kondensieren eines Kältemittels einer Klimaanlage, insbesondere zur Außenmontage, mit einem Gehäuse 15, das mindestens einen Lufteinlass 16 und mindestens einen Luftauslass 17 hat, und mit mindestens einem Ventilator 10 zum Erzeugen eines Luftstroms von dem Lufteinlass 16 zu dem Luftauslass 17, sowie mit mindestens zwei gegen die Vertikale geneigten Wärmetauschern 20, 30, die V-förmig oder umgekehrt V-förmig zwischen dem Lufteinlass 16 und dem Luftauslass 17 angeordnet sind und je mindestens einen Kältemitteleinlass 21, 32 sowie je mindestens einen Kältemittelauslass 22, 32 aufweisen, hat eine besonders große Kühlleistung bei geringem Energie und Platzbedarf, wenn zwischen den Wärmetauschern 20, 30 und dem Luftauslass 17 mindestens ein einen Kältemitteleinlass 41 und Kältemittelauslass 42 umfassender Wärmeübertrager 40 horizontal angeordnet ist.

## Beschreibung

Die Erfindung betrifft eine Kühlvorrichtung nach dem Oberbegriff des Anspruches 1 sowie ein Verfahren zum Kühlen und/oder Kondensieren eines Kältemittels, insbesondere eines Kältemittels einer Klimaanlage.

Klimaanlagen dienen der Erzeugung und Aufrechterhaltung eines vorgegebenen Raumklimas. Dies erfolgt in der Regel durch Verdunstung eines Kältemittels in einem Verdampfer, welches anschließend in einem geschlossenen Kreislauf wieder verflüssigt wird. Zur Verflüssigung von komprimiertem Kältemittel ist aus der DE 298 05 111 U1 eine Kühlvorrichtung bekannt. Die Kühlvorrichtung hat einen Lufteinlass und einen Luftauslass sowie einen Ventilator zum Erzeugen eines Luftstroms von dem Lufteinlass zu dem Luftauslass. Zwischen dem Lufteinlass und dem Luftauslass sind zwei gegen die Vertikale geneigte Wärmetauscher angeordnet. Das Kältemittel wird durch die Wärmtauscher gepumpt, wo es Wärmeenergie an den Luftstrom abgibt. Dadurch kühlt das Kältemittel soweit ab, dass es schließlich kondensiert und wieder einem Verdampfer zugeführt werden kann.

Der Erfindung liegt die Aufgabe zugrunde, eine Kühlvorrichtung nach dem Oberbegriff des Anspruchs 1 bereitzustellen, die bei geringerem Platzbedarf die gleiche Kühlleistung oder bei gleichem Platzbedarf eine erhöhte Kühlleistung bietet.

Die Aufgabe wird durch eine Kühlvorrichtung nach dem Anspruch 1 und durch ein Verfahren nach dem Anspruch 9 gelöst.

Die Kühlvorrichtung zum Kühlen und/oder Kondensieren eines Kältemittels einer Klimaanlage, insbesondere zur Außenmontage, weist mindestens einen Lufteinlass und mindestens einen Luftauslass auf. Ein oder mehrere Ventilatoren dienen zum Erzeugen eines Luftstroms von dem Lufteinlass zu dem Luftauslass. Zwischen dem Lufteinlass und dem Luftauslass sind mindestens zwei gegen die Vertikale geneigte Wärmetauscher angeordnet. Die Wärmetauscher sind gegeneinander V-förmig oder umgekehrt V-förmig geneigt und umfassen je mindestens einen Kältemitteleinlass sowie je mindestens einen Kältemittelauslass. Zwischen den Wärmetauschern und dem Luftauslass ist mindestens ein einen Kältemitteleinlass und einen Kältemittelauslass aufweisender Wärmetauscher horizontal angeordnet. Durch den Wärmeübertrager wird die Kühlleistung erhöht, ohne das Bauvolumen der Kühlvorrichtung wesentlich zu vergrößern.

Bevorzugt ist der Kältemittelauslass des Wärmeübertragers mit mindestens einem Kältemitteleinlass mindestens eines der Wärmetauscher verbunden. Dadurch kann ein besonders großer Temperaturgradient zwischen der Kühlvorrichtung zugeführtem Kältemittel und der Kühlvorrichtung abgeführtem Kältemittel erreicht werden. Natürlich kommt es dafür nicht darauf an, ob der Kältemittelauslass des Wärmeübertragers unmittelbar oder durch eine Leitung mit dem Kältemitteleinlass des bzw. der Wärmetauscher verbunden ist.

Die Kühlvorrichtung hat bevorzugt mindestens eine strömungstechnisch zu mindestens einem der Wärmetauscher parallel angeordnete Bypassöffnung für Kühlluft. Die Bypassöffnung und/oder der Lufteinlass sind bevorzugt stufenlos verschließbar bzw. öffenbar. Die Bypassöffnung ermöglicht es, den Energiebedarf des oder der Ventilatoren zu reduzieren, wenn zur Bereitstellung der nötigen Kühlleistung der Wärmeübertrager ausreicht. Wenn die Bypassöffnungen und/oder der Lufteinlass bevorzugt stufenlos verschließbar sind, kann der Luftstrom gut reguliert werden. Dazu kann die Kühlvorrichtung mindestens eine vorzugsweise motorisch verstellbare Lamellenklappe umfassen.

Durch eine bevorzugt einlassseitig des Wärmetauschers und/oder des Wärmeübertragers im Luftstrom angeordnete Düse zum Einbringen, insbesondere Vernebeln einer Kühlflüssigkeit kann die Kühlleistung weiter erhöht werden.

Zum Schutz der Kühlvorrichtung insbesondere, um ein Einfrieren des Kältemittels zu verhindern, ist es sinnvoll, den Luftauslass bei Nichtbenutzung der Kühlvorrichtung zu verschließen, z.B. durch eine bevorzugt stufenlos steuerbare Lamellenklappe.

Die Kühlvorrichtung hat bevorzugt mindestens einen Sensor, der z.B. die Temperatur des der Kühlvorrichtung zugeführten Kältemittels und/oder des abgeführten Kältemittels und/oder der durch den Lufteinlass angesaugten Luft- und/oder der durch Luftauslass abgegebenen Luft erfasst. Außerdem können z.B. die Volumenströme der Luft und/oder des Kältemittels durch Sensoren erfasst werden. Der Sensor bzw. die Sensoren sind mit einer Steuerung verbunden, die die erfassten Daten ausgewertet und in Abhängigkeit der erfassten Daten die Ventilatordrehzahl regelt. Zusätzlich oder alternativ kann die Steuerung den Luftstrom durch zumindest teilweises Schließen von Lufteinlass, Luftauslass oder gegebenenfalls einer Bypassöffnung regeln. Der Motor des Ventilators ist bevorzugt ein durch einen Frequenzumrichter geregelter Asynchronmotor.

Das Verfahren zum Kühlen und/oder Kondensieren eines Kältemittels einer Klimaanlage umfasst folglich zumindest folgende Schritte:

Erzeugen eines Luftstroms durch mindestens zwei gegen die Vertikale geneigte Wärmetauscher, die V-förmig oder umgekehrt V-förmig zwischen einem Lufteinlass und einem Luftauslass angeordnet sind und jeweils mindestens einen Kältemitteleinlass sowie jeweils mindestens einen Kältemittelauslass aufweisen. Zudem wird der Luftstrom durch einen zwischen den Wärmetauschern und dem Luftauslass horizontal angeordneten Wärmeübertrager geleitet, der ebenso mindestens einen Kältemitteleinlass und mindestens einen Kältemittelauslass aufweist. Während der Luftstrom durch die Wärmetauscher und den Wärmeübertrager geleitet wird, wird gleichzeitig das Kältemittel durch den Wärmeübertrager und/oder die Wärmetauscher geführt.

Dem Kältemittel lässt sich besonders viel Wärmeenergie entziehen, wenn das Kältemittel zunächst durch den Wärmeübertrager und anschließend durch mindestens einen der Wärmetauscher geleitet wird.

Durch Öffnen einer Bypassöffnung kann ein Luftstrom von der Bypassöffnung durch den Wärmeübertrager geleitet werden, ohne zuvor durch die Wärmetauscher geführt zu werden. Dadurch wird der Strömungswiderstand für den Luftstrom reduziert. Die Ventilatorleistung kann entsprechend reduziert werden, wodurch weniger Energie zur Erzeugung des Luftstromes benötigt wird.

Folglich wird die Bypassöffnung vorzugsweise zumindest teilweise geöffnet, wenn die Temperatur und/oder der Volumenstrom des von dem Wärmeübertrager abgeführten Kältemittels unter einer vorgegebenen Grenze liegen. Die Grenze ist vorzugsweise so bestimmt, dass eine ausreichende Kühlung des Kältemittels ausschließlich durch den Wärmeübertrager gewährleistet ist.

Das Leiten des Luftstroms von der Bypassöffnung zu dem Wärmeübertrager kann insbesondere dadurch geschehen, dass der Lufteinlass zumindest teilweise verschlossen wird. Dies erfolgt bevorzugt stufenlos. Auch dazu kann bevorzugt eine stufenlos einstellbare Lamellenklappe vorgesehen sein.

Die Kühlleistung wird erhöht, wenn der Luftstrom und/oder mindestens einer der Wärmetauscher und/oder der Wärmeübertrager - bevorzugt durch eine Mehrzahl von Hochdruckdüsen - mit einer Kühlflüssigkeit besprüht wird. Die Kühlflüssigkeit senkt die Temperatur des Luftstromes und erhöht dessen Luftfeuchtigkeit. Entsprechend wird ein besserer Wärmeaustausch zwischen dem Wärmeübertrager bzw. den Wärmetauschern und dem Luftstrom erreicht.

Der Luftstrom kann z.B. durch einen oder mehrere Ventilatoren erzeugt werden. Die Drehzahl des Ventilators und damit auch seine Leistungsaufnahmen wird bevorzugt in Abhängigkeit von der Temperatur der Luft am Lufteinlass und/oder am Luftauslass und/oder der Temperatur des Kältemittels an mindestens einem der Kältemitteleinlässe und/oder mindestens einem der Kältemittelauslässe geregelt. Zusätzlich oder optional kann der Volumenstrom des Luftstrom und/oder des Kältemittels, z.B. durch eine Messung der entsprechenden Strömungsgeschwindigkeit erfasst und in die Drehzahlregelung einbezogen werden. Der Ventilator kann bevorzugt auch mit einem Frequenzumrichter zusammenwirken, so dass seine Drehzahl einstellbar ist.

Anhand der Zeichnungen werden Ausführungsbeispiele der Erfindung schematisch vereinfacht beschrieben.

### Es zeigt:

Fig. 1: einen Querschnitt einer Kühlvorrichtung,
Fig. 2: einen Querschnitt einer weiteren Kühlvorrichtung,
Fig. 3: einen Querschnitt einer weiteren Kühlvorrichtung,
Fig. 4: einen Querschnitt einer Kühlvorrichtung,
Fig. 5: eine schematisierte Seitenansicht einer Kühlvorrichtung,
Fig. 6: eine aus zwei Kühlvorrichtungen nach Fig. 5 zusammengesetzte Doppelkühlzelle und
Fig. 7: eine zu einer Vielzahl von Kühlvorrichtungen zusammengesetzte Großkühlanlage.

Gleiche oder ähnliche Teile werden mit identischen Bezugszeichen bezeichnet.

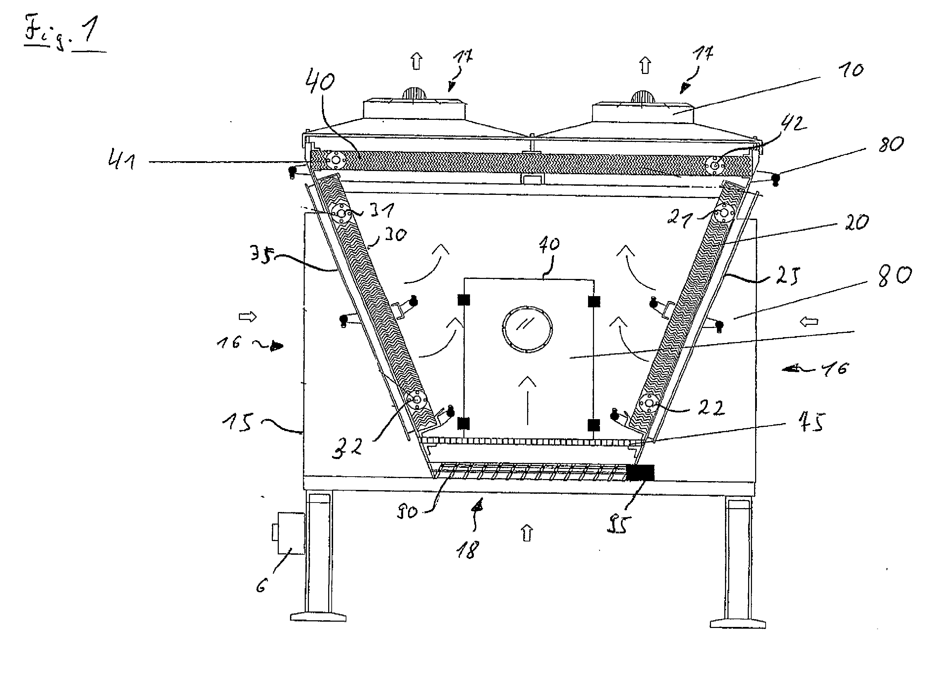

Die Kühlvorrichtung 1 in Fig. 1 hat ein Gehäuse 15, welches auf Ständer 5 aufgeständert ist. Das Gehäuse 15 hat zwei seitliche Lufteinlässe 16, eine untenliegende Bypassöffnung 18, und einen Luftauslass 17. In dem Gehäuse sind zwei im Querschnitt V-förmig gegeneinander geneigte Wärmetauscher 20, über denen ein Wärmeübertrager 40 horizontal angeordnet ist. Die Wärmetauscher 20, 30 haben je einen Kältemitteleinlass 21, 31 und einen Kältemittelauslass 22, 32 und sind durch Schutzgitter 25, 35 vor mechanischer Einwirkung, z.B. durch vom Wind getrieben Stöcke oder großen Hagelkörnern geschützt. Die Schutzgitter können gleichzeitig zur Befestigung von Hochdruckdüsen 80 dienen.

Der Wärmeübertrager 40 hat wie die Wärmetauscher 20, 30 einen Kältemitteleinlass 41 und einen Kältemittelauslass 42. Nicht dargestellt ist eine Verbindungsleitung von dem Kältemittelauslass 42 des Wärmeübertragers 40 zu den Kältemitteleinlässen 21, 31 der Wärmetauscher 20, 30. Der Kühlvorrichtung 1 zugeführtes Kältemittel fließt von dem Kältemitteleinlass 41 des Wärmeübertragers 40 durch diesen zum Kältemittelauslass 42 des Wärmeübertragers 40 und von dort in die Kältemitteleinlässe 21, 31 der Wärmetauscher 20, 30. In dem Wärmeübertrager 40 und/oder den Wärmetauschern wird das Kältemittel gekühlt bzw. kondensiert. Von den Kältemittelauslässen 22, 32 der Wärmetauscher kann das Kältemittel zu einem Verdampfer (nicht dargestellt) einer Kühlung geführt werden.

Zwischen den beiden Wärmetauschern 20, 30 ist eine Bypassöffnung 18 positioniert, die über eine von einem elektrischen Antrieb 95 gesteuerte Lamellenklappe 90 stufenlos verschließbar bzw. öffenbar ist. Bei geschlossener Bypassöffnung 18 strömt Kühlluft durch die Lufteinlässe 16, von dort durch die Wärmetauscher 20, 30 und dann weiter durch den Wärmetauscher 40 zu den Luftauslässen 17. Der Luftstrom wird dabei durch Ventilatoren 10 erzeugt. Bei nur geringem Kühlleistungsbedarf oder ausreichend kalter Kühlluft wird die Bypassöffnung 18 geöffnet, so dass die Kühlluft vermehrt bzw. im Wesentlichen nur durch den Wärmeübertrager 40 geführt wird. Entsprechend ist der Strömungswiderstand für den Luftstrom reduziert und die Leistung der Ventilatoren kann reduziert werden. Steigt der Kühlleistungsbedarf an, kann die Bypassöffnung 18 durch eine motorisch angetriebene Lamellenklappe 90 geschlossen werden. Nun wird die Kühlluft zunächst durch die Wärmetauscher 20, 30 und anschließend durch den Wärmeübertrager 40 geführt. Alternativ oder zusätzlich kann zur Deckung des Kühlleistungsbedarf, z.B. wenn die Temperatur der Kühlluft über einem vorbestimmten Wert liegt, die Kühlluft bzw. der Wärmetauscher 20, 30 und/oder Wärmeübertrager 40 durch Vernebeln einer Kühlflüssigkeit, z.B. Wasser, mittels der Hochdruckdüsen 80 befeuchtet werden. Über eine Wartungstür 70 und können Monteure in das Innere des Gehäuses 15 gelangen und sich dort auf einem Laufgitter 75 bewegen. Es empfiehlt sich vor Betreten des Gehäuses 15 mittels eines Schalters 6 die Ventilatoren 10 abzuschalten.

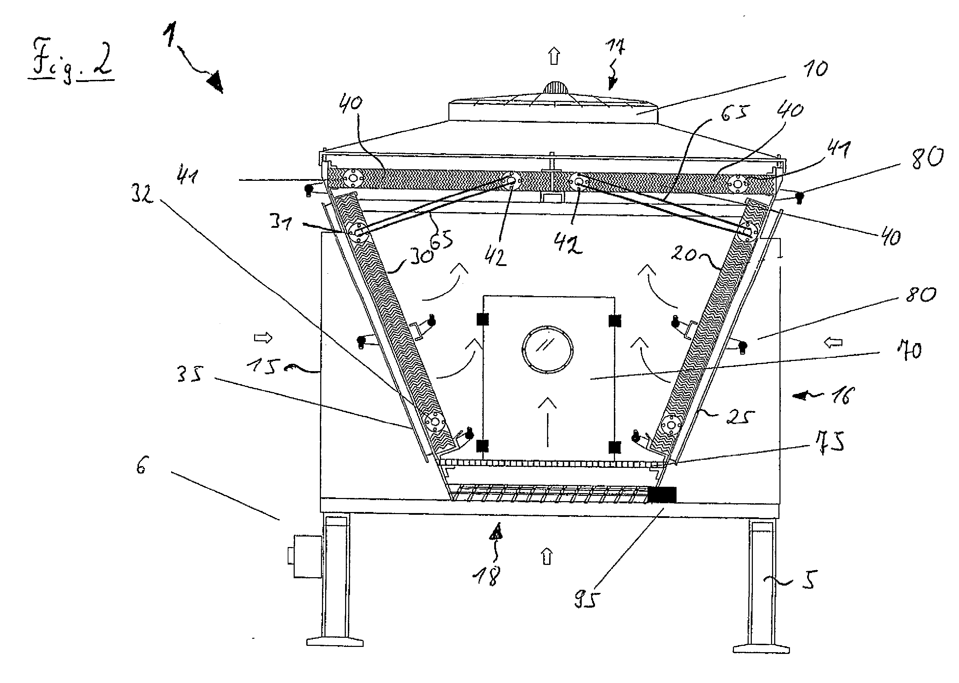

Der Aufbau der Kühlvorrichtung 1 in Fig. 2 entspricht im Wesentlichen dem anhand von Fig. 1 beschriebenen. Wie die anhand von Fig. 1 beschriebene Kühlvorrichtung 1 hat die Kühlvorrichtung in Fig. 2 zwei V-förmig angeordnete Wärmetauscher in einem seitlich offenen Gehäuse 15. Über den Wärmetauschern 20, 30 ist ein zweigeteilter Wärmeübertrager 40 horizontal angeordnet. Der Wärmeübertrager 40 hat zwei Kühlmitteleinlässe 41 und zwei Kühlmittelauslässe 42. Die Kühlmittelauslässe 42 sind über Leitungen 65 mit dem Kühlmitteleinlass 31 bzw. 21 der Wärmetauscher 30 bzw. 20 verbunden. Anstelle von zwei kleinen Ventilatoren wie in Fig. 1 gezeigt, hat die Kühlvorrichtung 1 in Fig. 2 einen großen zentralen Ventilator 10 mit einem zentralen Luftauslass 17. Die Drehzahl des Ventilators 10 wird von einer Steuerung 6 geregelt. Diese umfasst dazu einen Frequenzumrichter. Im Übrigen wird auf Beschreibung der Figur 1 verwiesen.

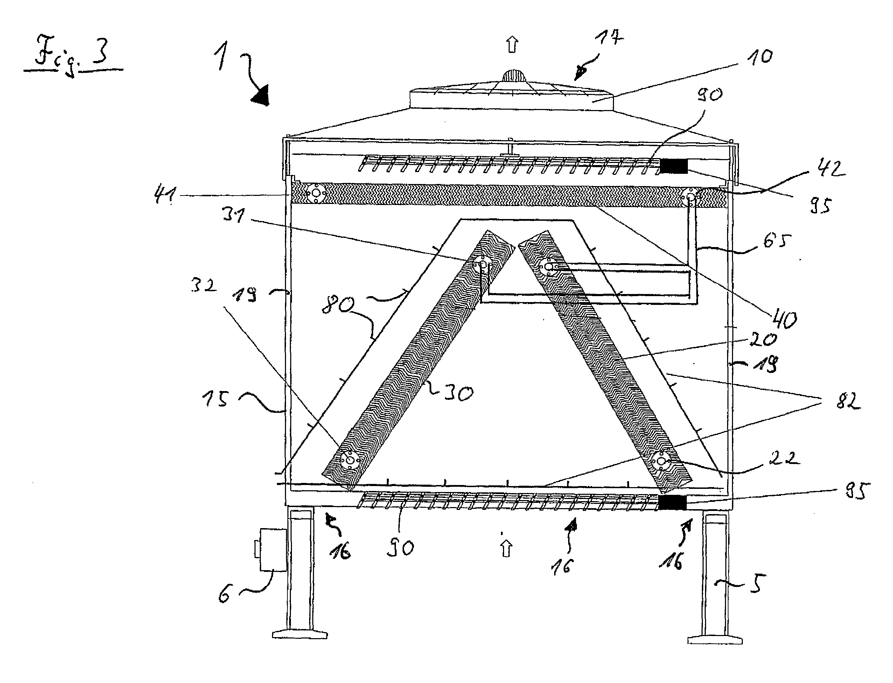

Die Kühlvorrichtung 1 in Fig. 3 hat ein Gehäuse 15 mit einem unten liegenden und durch eine Lamellenklappe 90 stufenlos verschließbaren Lufteinlass 16 und einem oben liegenden Luftauslass 17. Durch einen Ventilator 10 wird ein Luftstrom vom Lufteinlass 16 zu dem Luftauslass 17 erzeugt. In dem Gehäuse 15 sind umgekehrt V-förmig angeordnete Wärmetauscher 20, 30, über denen ein Wärmeübertrager 40 horizontal angeordnet ist. Die Luft strömt folglich vom Lufteinlass 16 durch die Wärmetauscher 20, 30 und von dort durch den Wärmeübertrager 40 zum Luftauslass 17, der durch eine Lamellenklappe 90 stufenlos verschließbar ist. Der Wärmeübertrager 40 hat einen Kältemittelauslass 42, an welchem über eine stilisierte Leitung 65 die Kältemitteleinlässe 21, 31 der Wärmetauscher 20, 30 angeschlossen sind. Die Kältemittelauslässe 22, 32 der Wärmetauscher 20, 30 können mit einem Verdampfer einer Kühlanlage verbunden werden. In dem Gehäuse 15 sind zwei Hochdruckleitungen 82, in die Hochdruckdüsen 80 zum Versprühen einer Kühlflüssigkeit eingeschraubt sind, in Luftrichtung vor dem Wärmetauscher 20, 30 bzw. vor dem Wärmeübertrager 40 vorgesehen. Im Unterschied zur Ausführungsform nach den Figuren 1 oder 2 ist das Gehäuse 15 hier mit zwei Wandungen 19 seitlich verschlossen, so dass der Lufteinlass 16 nunmehr an der Unterseite des Gehäuses 15 definiert ist.

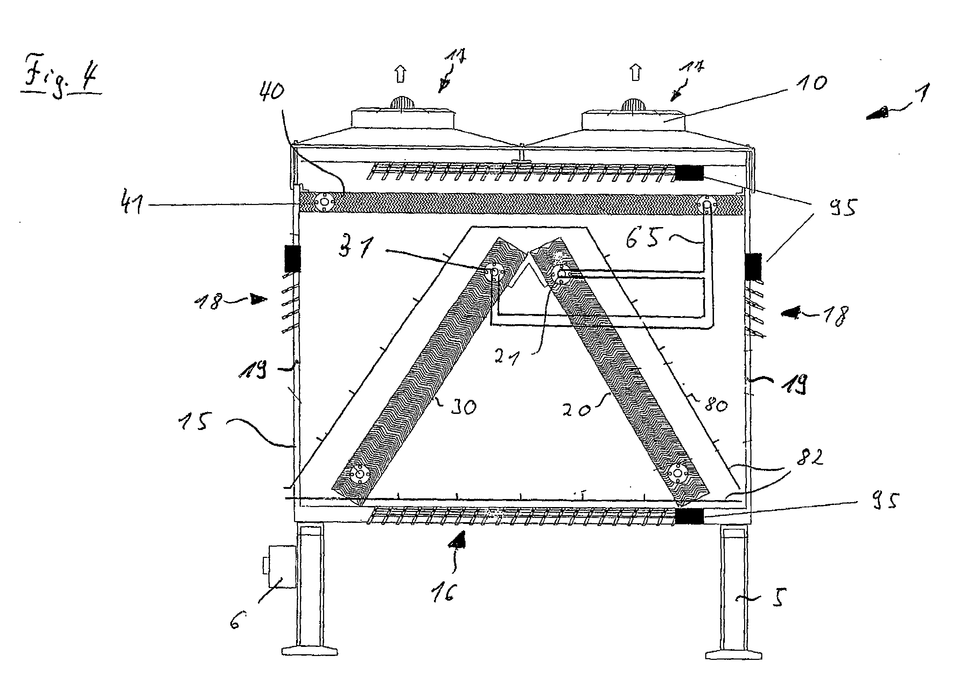

Der Grundaufbau der Kühlvorrichtung 1 in Fig. 4 entspricht der anhand von Fig. 3 beschriebenen. Jedoch sind auf dem Gehäuse anstelle eines großen zentralen Ventilators 10 zwei kleine Ventilatoren 10 angeordnet. Der Wärmeübertrager 40 ist hier einstückig ausgeführt. Der Kältemittelauslass 42 des Wärmeübertragers 40 ist, wie schon beschrieben, über Leitungen 65 mit den Kältemitteleinlässen 21, 31 der Wärmetauscher 20, 30 verbunden. Das Gehäuse 15 hat zwei seitliche Bypassöffnungen, die durch eine Lamellenklappe stufenlos verschließbar sind. Die Bypassöffnungen 18 ermöglichen es, Kühlluft parallel zu den Wärmetauschern 20, 30 anzusaugen und durch den Wärmeübertrager 40 zu leiten. Dadurch kann der Strömungswiderstand der Kühlvorrichtung 1 und damit die Leistungsaufnahme der Ventilatoren 10 reduziert werden, sofern die Kühlleistung des Wärmeübertragers 40 alleine ausreichend ist. Dies kann z.B. dann der Fall sein, wenn die Kühlluft sehr kalt ist und/oder der Kältebedarf gering ist.

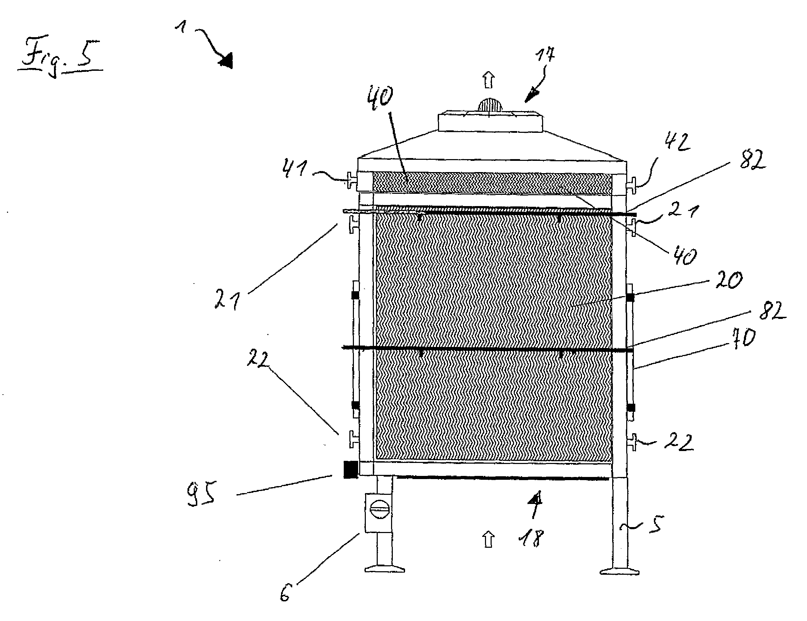

Die Kühlvorrichtung 1 in Fig. 5 entspricht der in Fig. 4. Sie unterscheidet sich lediglich durch die Anordnung der Hochdruckleitungen 82, die hier parallel zu dem Wärmeübertrager 40 horizontal verlaufen.

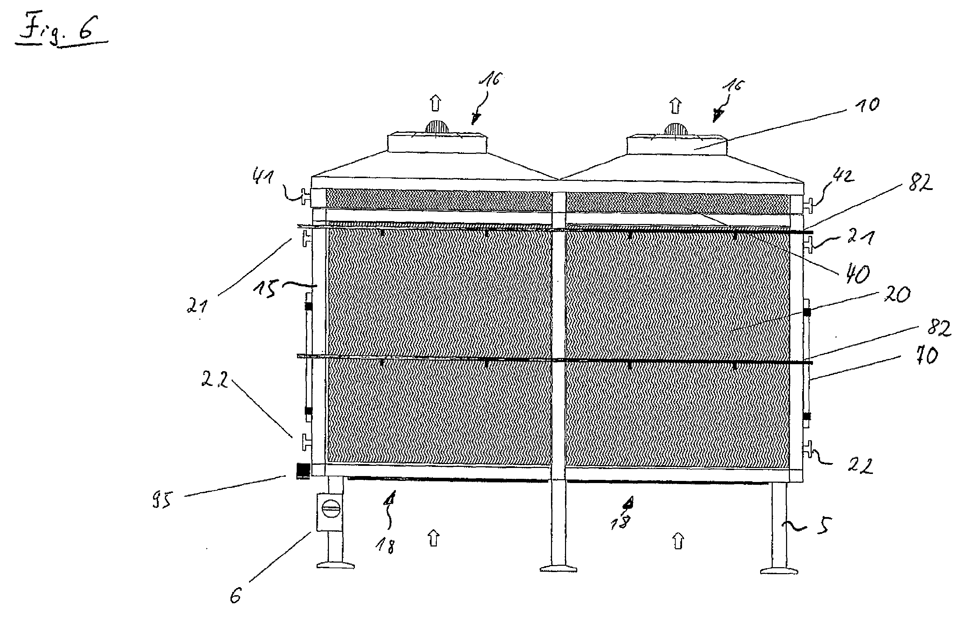

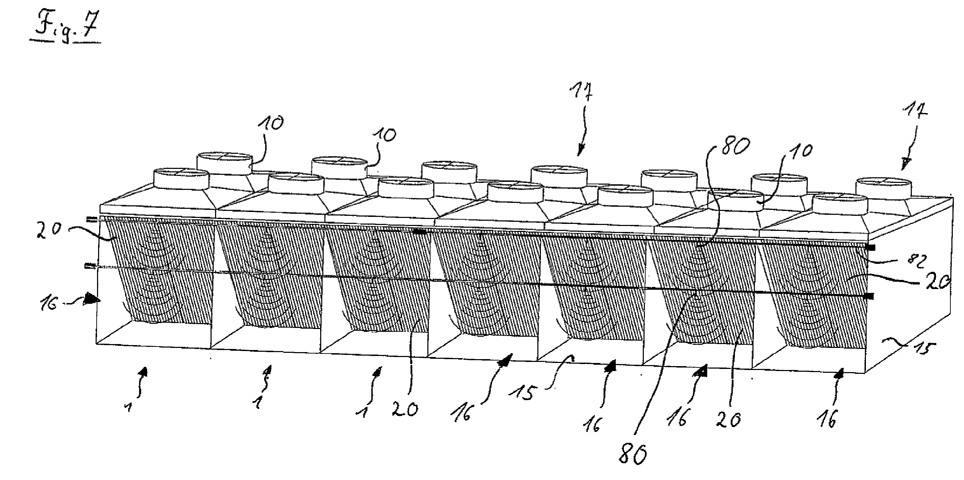

In den Figuren 6 und 7 sind Ausführungsformen dargestellt, bei denen mehrere Kühlvorrichtungen 1 durch lineare Aneinanderreihung zu größeren Kühleinheiten zusammengefasst sind.

### Bezugszeichenliste

- 5: Ständer
- 6: Schalter/Steuerung
- 10: Ventilator
- 15: Gehäuse
- 16: Lufteinlass
- 17: Luftauslass
- 18: Bypassöffnung
- 19: Wandungen (Gehäuse)
- 20: Wärmetauscher
- 21: Kältemitteleinlass
- 22: Kältemitteauslass
- 25: Schutzgitter
- 30: Wärmetauscher

- 31: Kältemitteleinlass
- 32: Kältemitteauslass
- 35: Schutzgitter
- 40: Wärmeübertrager
- 41: Kältemitteleinlass
- 42: Kältemitteauslass
- 70: Wartungstür
- 75: Laufgitter
- 80: Hochdruckdüse
- 82: Hochdruckleitungen
- 90: Lamellenklappe
- 95: Antrieb für Lamellenklappe

## Patentansprüche

1. Kühlvorrichtung (1) zum Kühlen und/oder Kondensieren eines Kältemittels, insbesondere eines Kältemittels einer Klimaanlage, insbesondere zur Außenmontage, umfassend:
- mindestens einen Lufteinlass (16) und mindestens einen Luftauslass (17)
- mindestens einem Ventilator (10) zum Erzeugen eines Luftstroms (50) von dem Lufteinlass (16) zu dem Luftauslass (17), und
- zwischen dem Lufteinlass (16) und dem Luftauslass (17), mindestens zwei gegen die Vertikale geneigte Wärmetauscher (20, 30), die gegeneinander V-förmig oder umgekehrt V-förmig angeordnet sind und je mindestens einen Kältemitteleinlass (21, 32) sowie je mindestens einen Kältemittelauslass (22, 32) aufweisen,
**dadurch gekennzeichnet, dass**
zwischen den Wärmetauschern (20, 30) und dem Luftauslass (17) mindestens ein einen Kältemitteleinlass (41) und Kältemittelauslass (42) umfassender Wärmeübertrager (40) horizontal angeordnet ist.

2. Kühlvorrichtung (1) nach Anspruch 1,
**dadurch gekennzeichnet, dass**
der Kältemittelauslass (42) des Wärmeübertragers (40) mit mindestens einem Kältemitteleinlass (21, 31) mindestens eines der Wärmetauscher (20, 30) verbunden ist.

3. Kühlvorrichtung (1) nach Anspruch 1 oder 2,
**dadurch gekennzeichnet, dass**
die Kühlvorrichtung (1) mindestens eine strömungstechnisch zu mindestens einem der Wärmetauscher parallel angeordnete Bypassöffnung (18) für Kühlluft umfasst, wobei die Bypassöffnung (18) und/oder der Lufteinlass (16) bevorzugt stufenlos verschließbar bzw. öffenbar sind/ist.

4. Kühlvorrichtung (1) nach Anspruch 3,
**dadurch gekennzeichnet, dass**
mindestens eine Bypassöffnung (18) zwischen den beiden Wärmetauschern (20, 30) positioniert ist.

5. Kühlvorrichtung (1) nach einem der vorhergehenden Ansprüche,
**dadurch gekennzeichnet, dass**
einlassseitig mindestens eines der Wärmetauscher (20, 30) und/oder des Wärmeübertragers (40) mindestens eine Düse (80) zum Einbringen, insbesondere Vernebeln einer Kühlflüssigkeit ist.

6. Kühlvorrichtung (1) nach einem der vorhergehenden Ansprüche,
**dadurch gekennzeichnet, dass**
der Luftauslass (17) verschließbar ist.

7. Kühlvorrichtung (1) nach einem der vorhergehenden Ansprüche,
**dadurch gekennzeichnet, dass**
die Kühlvorrichtung (1) ein Gehäuse aufweist, auf dem der Ventilator (10) angeordnet ist.

8. Kühlvorrichtung (1) nach einem der vorhergehenden Ansprüche,
**dadurch gekennzeichnet, dass**
die Kühlvorrichtung (1) eine Steuerung umfasst, die in Abhängigkeit von der Temperatur des der Kühlvorrichtung (1) zugeführten Kältemittels und/oder des abgeführten Kältemittels und/oder der durch den Luftteinlass (16) angesaugten Luft und/oder der durch den Luftauslass (17) abgegebenen Luft den Luftstrom durch die Wärmetauscher und/oder den Wärmeübertrager, insbesondere durch Regelung des Ventilators, regelt.

9. Verfahren zum Kühlen und/oder Kondensieren eines Kältemittels einer Klimaanlage umfassend die Schritte:
- Erzeugen eines Luftstroms durch mindestens zwei gegen die Vertikale geneigte Wärmetauscher (20, 30), die V-förmig oder umgekehrt V-förmig zwischen einem Lufteinlass (16) und einem Luftauslass (17) eines Gehäuses (15) angeordnet sind und jeweils mindestens einen Kältemitteleinlass (21, 32) sowie jeweils mindestens einen Kältemittelauslass (22, 32) aufweisen,
- Leiten des Luftstroms durch einen zwischen den Wärmetauschern (20, 30) und dem Luftauslass (17) horizontal angeordneten Wärmeübertrager (40) mit mindestens einem Kältemitteleinlass (41) und mindestens einem Kältemittelauslass (42), und
- Leiten des Kältemittels durch den Wärmeübertrager (40) und/oder die Wärmetauscher (20, 30).

10. Verfahren nach Anspruch 9,
**dadurch gekennzeichnet, dass**
das Kältemittel zunächst durch den Wärmeübertrager (40) und anschließend durch mindestens einen der Wärmetauscher (20, 30) geleitet wird.

11. Verfahren nach Anspruch 9 oder 10,
**dadurch gekennzeichnet, dass**
durch Öffnen einer Bypassöffnung (18) ein Luftstrom von der Bypassöffnung (18) durch den Wärmeübertrager (40) geleitet wird.

12. Verfahren nach Anspruch 11,
**dadurch gekennzeichnet, dass**
die Bypassöffnung (18) geöffnet wird, wenn die Temperatur und/oder der Volumenstrom des von dem Wärmeübertrager (40) abgeführten Kältemittels unter einer vorgegebenen Grenze liegen.

13. Verfahren nach Anspruch 11 oder 12,
**dadurch gekennzeichnet, dass**
zum Leiten des Luftstroms von der Bypassöffnung (18) zu dem Wärmeübertrager (40) der Lufteinlass (16) zumindest teilverschlossen wird.

14. Verfahren nach einem der Ansprüche 9 bis 13,
**dadurch gekennzeichnet, dass**
der Luftstrom und/oder mindestens einer der Wärmetauscher (20, 30) und/oder der Wärmeübertrager (40) bevorzugt mittels einer Mehrzahl von Hochdruckdüsen (80) mit einer Kühlflüssigkeit besprüht wird.

15. Verfahren nach einem der Ansprüche 9 bis 14,
**dadurch gekennzeichnet, dass**
der Luftstrom durch einen Ventilator erzeugt wird, dessen Drehzahl in Abhängigkeit von der Temperatur des Luftstroms am Lufteinlass (16) und/oder am Luftauslass (17) und/oder der Temperatur des Kältemittels an mindestens einem der Kältemitteleinlässe (21, 31, 41) und/oder an mindestens einem der Kältemittelauslässe (22, 32,42) geregelt wird.

## Geänderte Patentansprüche

### Geänderte Patentansprüche gemäss Regel 137(2) EPÜ.

**1.** Kühlvorrichtung (1) zum Kühlen und/oder Kondensieren eines Kältemittels, insbesondere eines Kältemittels einer Klimaanlage, insbesondere zur Außenmontage, umfassend:
- mindestens einen Lufteinlass (16) und mindestens einen Luftauslass (17)
- mindestens einem Ventilator (10) zum Erzeugen eines Luftstroms (50) von dem Lufteinlass (16) zu dem Luftauslass (17), und
- zwischen dem Lufteinlass (16) und dem Luftauslass (17), mindestens zwei gegen die Vertikale geneigte Wärmetauscher (20, 30), die gegeneinander V-förmig oder umgekehrt V-förmig angeordnet sind und je mindestens einen Kältemitteleinlass (21, 32) sowie je mindestens einen Kältemittelauslass (22, 32) aufweisen,
wobei zwischen den Wärmetauschern (20, 30) und dem Luftauslass (17) mindestens ein einen Kältemitteleinlass (41) und Kältemittelauslass (42) umfassender Wärmeübertrager (40) horizontal angeordnet ist,
**dadurch gekennzeichnet, dass**
einlassseitig mindestens eines der Wärmetauscher (20, 30) und/oder des Wärmeübertragers (40) mindestens eine Düse (80) zum Einbringen, insbesondere Vernebeln einer Kühlflüssigkeit ist.

**2.** Kühlvorrichtung (1) nach Anspruch 1,
**dadurch gekennzeichnet, dass**
der Kältemittelauslass (42) des Wärmeübertragers (40) mit mindestens einem Kältemitteleinlass (21, 31) mindestens eines der Wärmetauscher (20, 30) verbunden ist.

**3.** Kühlvorrichtung (1) nach Anspruch 1 oder 2,
**dadurch gekennzeichnet, dass**
die Kühlvorrichtung (1) mindestens eine strömungstechnisch zu mindestens einem der Wärmetauscher parallel angeordnete Bypassöffnung (18) für Kühlluft umfasst, wobei die Bypassöffnung (18) und/oder der Lufteinlass (16) bevorzugt stufenlos verschließbar bzw. öffenbar sind/ist.

**4.** Kühlvorrichtung (1) nach Anspruch 3,
**dadurch gekennzeichnet, dass**
mindestens eine Bypassöffnung (18) zwischen den beiden Wärmetauschern (20, 30) positioniert ist.

**5.** Kühlvorrichtung (1) nach einem der vorhergehenden Ansprüche,
**dadurch gekennzeichnet, dass**
der Luftauslass (17) verschließbar ist.

**6.** Kühlvorrichtung (1) nach einem der vorhergehenden Ansprüche,
**dadurch gekennzeichnet, dass**
die Kühlvorrichtung (1) ein Gehäuse aufweist, auf dem der Ventilator (10) angeordnet ist.

**7.** Kühlvorrichtung (1) nach einem der vorhergehenden Ansprüche,
**dadurch gekennzeichnet, dass**
die Kühlvorrichtung (1) eine Steuerung umfasst, die in Abhängigkeit von der Temperatur des der Kühlvorrichtung (1) zugeführten Kältemittels und/oder des abgeführten Kältemittels und/oder der durch den Luftteinlass (16) angesaugten Luft und/oder der durch den Luftauslass (17) abgegebenen Luft den Luftstrom durch die Wärmetauscher und/oder den Wärmeübertrager, insbesondere durch Regelung des Ventilators, regelt.

**8.** Verfahren zum Kühlen und/oder Kondensieren eines Kältemittels einer Klimaanlage umfassend die Schritte:
- Erzeugen eines Luftstroms durch mindestens zwei gegen die Vertikale geneigte Wärmetauscher (20, 30), die V-förmig oder umgekehrt V-förmig zwischen einem Lufteinlass (16) und einem Luftauslass (17) eines Gehäuses (15) angeordnet sind und jeweils mindestens einen Kältemitteleinlass (21, 32) sowie jeweils mindestens einen Kältemittelauslass (22, 32) aufweisen,
- Leiten des Luftstroms durch einen zwischen den Wärmetauschern (20, 30) und dem Luftauslass (17) horizontal angeordneten Wärmeübertrager (40) mit mindestens einem Kältemitteleinlass (41) und mindestens einem Kältemittelauslass (42), und
- Leiten des Kältemittels durch den Wärmeübertrager (40) und/oder die Wärmetauscher (20, 30),
**dadurch gekennzeichnet, dass**
der Luftstrom und/oder mindestens einer der Wärmetauscher (20, 30) und/oder der Wärmeübertrager (40) bevorzugt mittels einer Mehrzahl von Hochdruckdüsen (80) mit einer Kühlflüssigkeit besprüht wird.

**9.** Verfahren nach Anspruch 8,
**dadurch gekennzeichnet, dass**
das Kältemittel zunächst durch den Wärmeübertrager (40) und anschließend durch mindestens einen der Wärmetauscher (20, 30) geleitet wird.

**10.** Verfahren nach Anspruch 8 oder 9,
**dadurch gekennzeichnet, dass**
durch Öffnen einer Bypassöffnung (18) ein Luftstrom von der Bypassöffnung (18) durch den Wärmeübertrager (40) geleitet wird.

**11.** Verfahren nach Anspruch 10,
**dadurch gekennzeichnet, dass**
die Bypassöffnung (18) geöffnet wird, wenn die Temperatur und/oder der Volumenstrom des von dem Wärmeübertrager (40) abgeführten Kältemittels unter einer vorgegebenen Grenze liegen.

**12.** Verfahren nach Anspruch 10 oder 11,
**dadurch gekennzeichnet, dass**
zum Leiten des Luftstroms von der Bypassöffnung (18) zu dem Wärmeübertrager (40) der Lufteinlass (16) zumindest teilverschlossen wird.

**13.** Verfahren nach einem der Ansprüche 8 bis 12,
**dadurch gekennzeichnet, dass**
der Luftstrom durch einen Ventilator erzeugt wird, dessen Drehzahl in Abhängigkeit von der Temperatur des Luftstroms am Lufteinlass (16) und/oder am Luftauslass (17) und/oder der Temperatur des Kältemittels an mindestens einem der Kältemitteleinlässe (21, 31, 41) und/oder an mindestens einem der Kältemittelauslässe (22, 32,42) geregelt wird.
